# EUROPÄISCHE PATENTSCHRIFT

(11) **EP 3 416 830 B1**
(45) Veröffentlichungstag und Bekanntmachung des Hinweises auf die Patenterteilung: **19.05.2021**
(21) Anmeldenummer: 17713158.8
(22) Anmeldetag: 14.02.2017
(51) Int. Cl.: B42D 25/324, B42D 25/36, B42D 25/425, B42D 25/23

(54) **TRAGBARER DATENTRÄGER MIT HOCHPRÄGUNG**
PORTABLE DATA CARRIER COMPRISING A RELIEF STRUCTURE
SUPPORT DE DONNÉES PORTATIF POURVU D'UN BOSSELAGE

(30) Priorität: 17.02.2016 DE 102016001834
(43) Veröffentlichungstag der Anmeldung: 26.12.2018
(73) Patentinhaber: Giesecke+Devrient Mobile Security GmbH, 81677 München (DE)
(72) Erfinder: RIEDL, Josef, 85395 Attenkirchen (DE)
(86) Internationale Anmeldenummer: PCT/EP2017/000204
(87) Internationale Veröffentlichungsnummer: WO 2017/140421

(56) Entgegenhaltungen:
- EP-A2- 0 308 904
- DE-A1- 3 213 315
- DE-A1- 3 314 244
- US-A- 3 391 479
- US-A- 4 522 670
- US-A1- 2007 224 341

## Beschreibung

Die vorliegende Erfindung beschreibt einen tragbaren Datenträger, der aus mehreren Folien aufgebaut ist und auf seiner Außenseite eine Hochprägung aufweist.

Tragbare Datenträger, wie z.B. Kreditkarten, Bankkarten, haben eine Hochprägung auf ihrer Außenseite. Die Hochprägung wird mittels einer Farbe sichtbar gemacht, wobei die Farbe beispielsweise thermisch auf die Hochprägung aufgebracht wird. Die Farbe, welche einen Kontrast zur umgebenden Oberfläche des Datenträgers bildet, wird innerhalb kurzer Zeit durch normale Benutzung abgerieben, sodass der Kontrast und eine Erkennbarkeit der Hochprägung im Verlauf der Verwendung des Datenträgers zunehmend schwächer werden. Die Folge ist, dass die Hochprägung nicht mehr oder nur mehr sehr schwer lesbar ist.

Das Dokument DE 32 13 315 A1 offenbart einen tragbaren Datenträger mit einer Kartenoberfläche aus Kunststoff mit einer Reliefstruktur.
Die Dokumente US 4 522 670 A, US 2007/224341 A1 und US 3 391 479 A offenbaren weitere tragbare Datenträger.

Es ist deshalb Aufgabe der vorliegenden Erfindung eine Lösung für das oben beschriebene Problem zur Verfügung zu stellen, dass die Hochprägung eines tragbaren Datenträgers während der Verwendung des Datenträgers gut lesbar bleibt.

Die Aufgabe wird gelöst durch einen in Anspruch 1 definierten tragbaren Datenträger.

Der Vorteil der Erfindung ist, dass der Zusatzstoff, der einen Kontrast zur umgebenden Oberfläche des tragbaren Datenträgers bildet, in die Folie integriert ist, sodass der Kontrast nicht durch normale und bestimmungsgemäße Benutzung des Datenträgers verschwindet, wie dies im Stand der Technik geschieht, indem die Farbe, die auf der Oberfläche der Hochprägung angeordnet ist, abgerieben wird.

Eine vorteilhafte Ausführung ist, dass die Folie, die einen Zusatzstoff enthält, auf der Außenseite und/oder im Inneren des Datenträgers angeordnet ist. Der Vorteil ist, dass die dichroitische Eigenschaft des Zusatzstoffs auf der Außenseite am besten zu erkennen ist. Es ist zwar möglich, dass der Zusatzstoff auch in Folien im Inneren des Datenträgers angeordnet wird, aber dann müssen die darüber liegenden Folien aus einem lichtdurchlässigen Material bestehen, damit die dichroitische Eigenschaft des Zusatzstoffs zur Geltung kommt bzw. von außen zu erkennen ist.

Erfindungsgemäß ist die Folie, in welcher der Zusatzstoff angeordnet ist, eine Streifenfolie.

Der Vorteil einer Streifenfolie ist, dass die Kosten z.B. für den Zusatzstoff gering gehalten werden, wenn z.B. nur im Bereich der Hochprägung eine Streifenfolie angeordnet wird, welche mindestens einen Zusatzstoff enthält.

Eine weitere vorteilhafte Ausführung ist, dass der Zusatzstoff ein Pigment und/oder ein Füllstoff und/oder ein Farbstoff und/oder ein flüssiges Kristallpigment ist. Neben den genannten Beispielen sind auch alle anderen geeigneten Zusatzstoffe möglich. Beispielsweise werden im Handel als Zusatzstoffe Colorstream-Pigmente, Iriodine oder Miraval angeboten. Als flüssige Kristallpigmente werden im Handel z.B. Helicone angeboten.

Eine weitere vorteilhafte Ausführung ist, dass die Folie, in welcher der Zusatzstoff angeordnet ist, eine dichromatische Folie ist. Dies verstärkt den Kontrast der Hochprägung zur Umgebung.

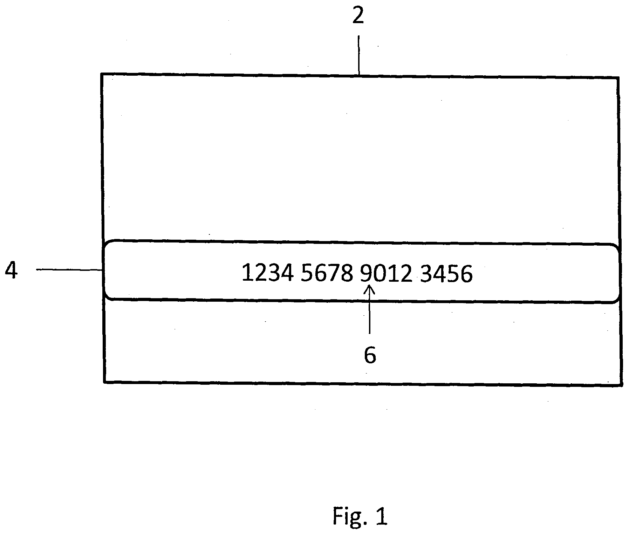

Weitere Merkmale und Vorteile der Erfindung ergeben sich aus der folgenden Beschreibung eines erfindungsgemäßen Ausführungsbeispiels im Zusammenhang mit Figur 1.

Der erfindungsgemäße tragbare Datenträger 2 ist in Figur 1 in Aufsicht dargestellt. Der Datenträger 2 weist auf seiner Außenseite eine Folie 4 mit mindestens einem Zusatzstoff auf, der eine dichroitische Eigenschaft hat. In der Folie 4 befindet sich eine Hochprägung 6, beispielsweise in Form einer beliebigen Zahlenreihe. Indem die Hochprägung 6 in der Folie 4 mit Zusatzstoff angeordnet ist, ergibt sich ein dauerhafter Kontrast zwischen Hochprägung 6 in Form der beispielhaften Zahlenreihe und umgebender Oberfläche des Datenträgers 2, sodass dauerhaft die Hochprägung 6 gut erkannt wird, ohne den Nachteil des Stands der Technik, dass der Kontrast zunehmend geringer wird, weil die aufgebrachte Farbe auf der Oberfläche der Hochprägung durch die übliche Verwendung abgerieben wird.

In Figur 1 erstreckt sich die Folie 4 im Wesentlichen auf den Bereich der

Hochprägung 6. Es ist nicht erfindungsgemäß jedoch genauso möglich, dass sich die Folie 4 über die gesamte Oberfläche des Datenträgers 2 erstreckt. Für den in Figur 1 dargestellten Fall ist erfindungsgemäß eine Streifenfolie vorgesehen. Streifenfolien mit einem dichroitischen Zusatzstoff können sehr genau auf eine bestimmte Fläche, z.B. einer Hochprägung, eines tragbaren Datenträgers zugeschnitten werden, wenn es z.B. darum geht, dass Herstellungskosten gespart werden sollen.

### Bezugszeichenliste

- 2: tragbarer Datenträger
- 4: Folie mit Zusatzstoffen
- 6: Hochprägung

## Patentansprüche

1. Tragbarer Datenträger (2), der aus mehreren Folien aufgebaut ist, wobei der Datenträger (2) auf mindestens einer seiner Außenseiten eine dreidimensionale Hochprägung (6) aufweist, wobei im Bereich der Hochprägung (6) mindestens eine Folie (4) angeordnet ist, die mindestens einen Zusatzstoff enthält, wobei der Zusatzstoff eine dichroitische Eigenschaft hat, sodass der Zusatzstoff in Abhängigkeit vom Betrachtungswinkel eine unterschiedliche Farbe reflektiert, und wobei die Folie (4), in welcher der Zusatzstoff angeordnet ist, eine Streifenfolie ist.

2. Tragbarer Datenträger (2) nach Anspruch 1, **dadurch gekennzeichnet, dass** die Folie (4), die einen Zusatzstoff enthält, auf der Außenseite und/oder im Inneren des Datenträgers (2) angeordnet ist.

3. Tragbarer Datenträger (2) nach Anspruch 2, **dadurch gekennzeichnet, dass** der Zusatzstoff ein Pigment und/oder ein Füllstoff und/oder ein Farbstoff und/oder ein flüssiges Kristallpigment ist.

4. Tragbarer Datenträger (2) nach einem der vorhergehenden Ansprüche, **dadurch gekennzeichnet, dass** die Folie (4), in welcher der Zusatzstoff angeordnet ist, eine dichromatische Folie ist.

## Claims

1. A portable data carrier (2) which is composed of several foils,
wherein the data carrier (2) has a three-dimensional high embossing (6) on at least one of its outsides,
wherein in the region of the high embossing (6) at least one foil (4) is arranged, which contains at least one additive,
wherein the additive has a dichroic property, so that the additive reflects a different color in dependence on the viewing angle, and
wherein the foil (4), in which the additive is arranged, is a strip foil.

2. The portable data carrier (2) according to claim 1, **characterized in that** the foil (4) containing an additive is arranged on the outside and/or on the inside of the data carrier (2).

3. The portable data carrier (2) according to claim 2, **characterized in that** the additive is a pigment and/or a filler and/or a dye and/or a liquid crystal pigment.

4. The portable data carrier (2) according to any of the preceding claims, **characterized in that** the foil (4), in which the additive is arranged, is a dichromic foil.

## Revendications

1. Support de données portable (2) constitué de plusieurs feuilles, le support de données (2) comportant sur au moins une de ses faces extérieures un gaufrage en relief (6) tridimensionnel, cependant que, dans la zone du gaufrage en relief (6), au moins une feuille (4) contenant au moins une substance supplémentaire est agencée,
cependant que la substance supplémentaire a une propriété dichroïque, de telle sorte que la substance supplémentaire réfléchit une couleur différente en fonction de l'angle d'observation,
et cependant que la feuille (4) dans laquelle la substance supplémentaire est agencée est une feuille en ruban.

2. Support de données portable (2) selon la revendication 1, **caractérisé en ce que** la feuille (4) contenant une substance supplémentaire est agencée sur la face extérieure et/ou à l'intérieur du support de données (2).

3. Support de données portable (2) selon la revendication 2, **caractérisé en ce que** la substance supplémentaire est un pigment et/ou une matière de remplissage et/ou un colorant et/ou un pigment cristaux liquides.

4. Support de données portable (2) selon une des revendications précédentes, **caractérisé en ce que** la feuille (4) dans laquelle la substance supplémentaire est agencée est une feuille dichromatique.
